# EUROPEAN PATENT SPECIFICATION

(11) **EP 3 375 285 B1**
(45) Date of publication and mention of the grant of the patent: **17.11.2021**
(21) Application number: 16863302.2
(22) Date of filing: 26.01.2016
(51) Int. Cl.: A01K 89/01

(54) **FISHING LINE WHEEL PROVIDED WITH FISHING SIGNAL DEVICE**
ANGELSCHNURRAD MIT ANGELSIGNALVORRICHTUNG
ROUE DE LIGNE DE PÊCHE AYANT UN DISPOSITIF DE SIGNALISATION DE PÊCHE

(30) Priority: 13.11.2015 CN 201510773616; 13.11.2015 CN 201520902358 U
(43) Date of publication of application: 19.09.2018
(73) Proprietor: Ningbo Zhongyuan Alljoy Fishing Tackle Co., Ltd., Ningbo, Zhejiang 315336 (CN)
(72) Inventor: SHEN, Zhicheng, Ningbo, Zhejiang 315336 (CN)
(74) Representative: Strehl Schübel-Hopf & Partner
(86) International application number: PCT/CN2016/072187
(87) International publication number: WO 2017/080112

(56) References cited:
- CN-A- 102 812 939
- CN-A- 105 230 583
- CN-U- 201 440 884
- CN-U- 203 467 469
- CN-Y- 2 862 694
- GB-A- 2 248 161
- US-A1- 2005 155 272
- US-A1- 2009 199 454
- US-A1- 2009 313 876
- US-B1- 7 364 105

## Description

### Technical Field

The invention relates to a fishing line reel; specifically, it relates to a fishing line reel provided with fishing signal device that can learn about the bait eating conditions of fish.

### Background Art

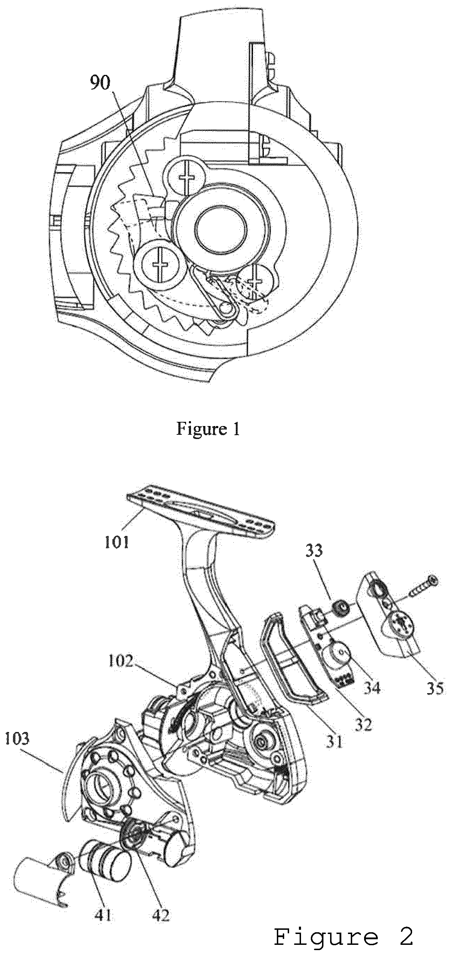

The fishing line reel comprises a fishing line reel body, a winding reel for coiling and a rotor, the said fishing line reel body comprises a fishing rod mounting base part, a frame part and a cover body part that can be mounted to the fishing rod, the said frame part is provided with an accommodating space for installing the rotational structure of the rotor as well as other structures, the said cover body part is for covering the accommodating space of the frame part; the said winding reel is installed at the fishing line reel body, that can move back and forth relative to the fishing line reel body; and the said rotor is installed at the fishing line reel body in a rotatable way, for winding the fishing line to the winding reel. For common design, look at the fishing line reel from the front, when winding the fishing line, the rotor rotates clockwise, as is shown in Figure 1, and the reaction bird piece 90 (as is shown by the solid line) is at the side of the center of the circle under the action of the mute ring; when the fishing line is wound and reaches the state of waiting for fish to eat the bait, due to small radian rotation of the rotor, the reaction bird piece 90 (as is shown by the dotted line) moves to the ratchet wheel of the fishing line seat, and the maximum moving distance can meet the extent of clamping with the ratchet gear of the fishing line seat.

When using the fishing line reel of reaction bird piece structure to fish in real life, generally, whether or not the fishing line shall be wound up shall be judged by observing the dynamic status of the fishing line or through the sound of the bell hung on the fishing rod; however, the optimal opportunity of winding up the line is often lost due to inaccurate judgment, enabling the fish hooked to run away, lack of the fun of fishing. This is because the fishing line reel is not arranged with an effective fishing signal device. Therefore, further improvement shall be made to the fishing line reel of the structure of a reaction bird piece of the existing technology.

CN 2 862 694 Y, GB 2 248 161 A, US 7 364 105 B1, CN 203 467 469 U, CN 201 440 884 U, US 2009/313876 A1 and US 2009/199454 A1 disclose each a fishing line reel with a fishing signal device to indicate when a fish has bitten the bait. CN 102 812 939 A discloses a double-bearing fishing reel comprising a mute ring. US 2005/155272 A1 discloses a fishing float wherein a pull by a fish moves an inductive shaft to generate current in a coil thereby activating an LED.

### Contents of the Invention

As to the above deficiencies, the invention intends to solve the existing technological problems, so as to provide a fishing line reel provided with fishing signal device.

To achieve the above purpose, the invention adopts the following technical solution:
A fishing line reel provided with fishing signal device, comprising a fishing line reel body, a winding reel, a transmission gear and a rotor, wherein said fishing line reel body comprises a fishing rod mounting base part, a frame part and a cover body part, the said fishing line reel further comprises a fishing signal device, and the said fishing signal device further comprises: an electric control part, an alarm switch part and an alarm initiation part, and the said alarm initiation part comprises: a mute ring lining and a mute ring, and the said alarm initiation part further comprises: a reaction bird piece, a bird piece reset seat and a reset seat spring, where,
said reaction bird piece is a long body, comprising a mounting hole, a limiting hole, a mute ring clamping protrusion and a spring catch,
said mounting hole is a waist-type hole, located in the middle of the said reaction bird piece;
said mute ring clamping protrusion and spring catch are respectively located at both ends of the reaction bird piece;

The said limiting hole is a waist-type hole, located between the said mounting hole and the said spring catch,

The said reaction bird piece, mounting hole, limiting hole, mute ring clamping protrusion and spring catch are made into one piece by molding;

Besides, one side of the said bird piece reset seat is a reset seat arc-shaped groove, while the other side is opened with a spring emplacement hole, and the side where the said bird piece reset seat is connected with the said reaction bird piece is arranged with a spacing clip;

The said reset seat spring is a compression spring, one end of the said reset seat spring is inserted in the said spring emplacement hole, while the other end of the said reset seat spring protruding from the spring emplacement hole is connected with the said spring catch,
said alarm switch part comprises: an alarm switch dial ring, an alarm switch tension spring and an alarm switch copper sheet part, where,
said alarm switch dial ring comprises a ring holding part and a ring dialing part, the said ring holding part is connected with the said mute ring lining, and the said ring dialing part is connected with the said alarm switch copper sheet part flexibly;
said alarm switch tension spring is an extension spring, one end of the said alarm switch tension spring is connected with the said ring dialing part, while the other end is connected with the said fishing line reel body; and
said alarm switch copper sheet part is the combination of two copper sheets, the said alarm switch copper sheet part is assembled at the said fishing line reel body, one end of the said alarm switch copper sheet part is connected with the ring dialing part of the said alarm switch dial ring flexibly, and the other end is connected with the said electric control part.

As to the fishing line reel according to a preferred embodiment of the invention, the said electric control part comprises a power supply part and a control part, the said control part is connected with the said frame part, and the said control part comprises a waterproof ring, a circuit board combination, a button, a buzzer and an end cover.

As to the fishing line reel according to a preferred embodiment of the invention, the said control part further comprises two power supply connecting parts, the said two power supply connecting parts are connected with the said circuit board combination via electric wire, the said two power supply connecting parts are assembled to the said frame part, and one end of the said two power supply connecting parts face the said cover body part;
besides, the said power supply part is connected with the said cover body part, and the said power supply part comprises at least one battery, two battery springs and two power contacts,
said two battery springs are respectively assembled at both ends of the battery accommodating space of the said cover body part, and middle of the said two battery springs are connected with at least one of the said battery;
said two power contacts are assembled at the said cover body part, corresponding to the positions of the said two power supply connecting parts, and the said two power contacts are connected with the said two battery springs.

As to the fishing line reel according to a preferred embodiment of the invention, the said circuit board combination comprises a microcontroller, for controlling the buzzer.

Since the above technical features are adopted, compared with the existing technology, the invention has the following superiorities and positive effects:
Firstly, the invention can effectively remind that a fish is hooked, the fisherman can wind up the line at the most appropriate time, catch big fish, and raise the fun of fishing;
Secondly, the invention uses the existing components flexibly, technology is promoted, with low cost;
Thirdly, since the electric control part of the invention is separately placed, shape of the fishing line reel is more flexible, with more aesthetic appearance.

Of course, any embodiments implementing the contents of the invention are not required to have all of the above technical effects.

### Description of Figures

Figure 1 shows a diagram where the reaction bird piece of the fishing line reel in the existing technology moves;
Figure 2 shows a diagram of the application where the fishing line reel body and the fishing signal device are separated in an explosive way;
Figure 3 shows a diagram where the alarm switch part is separated from the alarm initiation part in an explosive way;
Figure 4 shows a diagram of the reaction bird piece, bird piece reset seat and reset seat spring;
Figure 5 shows a diagram of the power supply connecting parts;
Figure 6 shows a diagram of the power contacts;
Figure 7 shows a diagram of the position of the reaction bird piece of the application when the fishing line reel conducts clockwise rotation;
Figure 8 shows a diagram of the moving location and angle of the reaction bird piece of the application;
Figure 9 shows a diagram where the reaction bird piece of the application is pushed by the ratchet gear of the fishing line seat;
Figure 10 shows a work flow diagram of the application;
Figure 11 shows a circuit diagram of the application.

### Specific Embodiments

The following is the detailed description of some preferred embodiments of this invention according to the figures herein; however, this invention is not limited to these embodiments. To enable the public to learn about the invention thoroughly, specific details are described in the preferred embodiments of the invention below; while technicians of this field can totally understand the invention without the description of such details. Besides, in order not to cause unnecessary confusion to the essence of the invention, well-known methods, processes, flows and elements, etc. are not described in detail.

General spinning fishing line reel comprises a fishing line reel body, a winding reel for coiling, a transmission gear and a rotor, the said fishing line reel body comprises a fishing rod mounting base part 101, a frame part 102 and a cover body part 103, the said cover body part 103 is for covering the accommodating space of the frame part 102; the said winding reel is installed at the fishing line reel body, that can move back and forth relative to the fishing line reel body; and the said rotor is installed at the fishing line reel body in a rotatable way, for winding the fishing line to the winding reel; when it comes to usage, before throwing the fishing line, switch the fishing line guide arm from the state of being intertwined by the fishing line to the state of setting out the fishing line; in this state, grapple the fishing line with the forefinger of the hand holding the fishing rod and throw the fishing rod simultaneously. In this way, the fishing line will then fly out due to the weight of the hook component. After throwing, maintain the fishing line guide arm at the state of setting out the fishing line till the hook component reaches the fishing place in the water, and reverse the handle towards the fishing line winding direction in such state, and the rotor will rotate towards the fishing line winding direction. When the rotor rotates towards the fishing line winding direction, the fishing line guide arm will be reset by the guide arm flipping structure to the fishing line winding state. When the fishing line is intertwined in place, wait for the fish to be hooked.

Please refer to Figure 2, Figure 3 and Figure 4, diagrams where the fishing line reel body is separated from the fishing signal device in an explosive way. The fishing line reel further comprises a fishing signal device, the said fishing signal device further comprises: an electric control part, an alarm switch part and an alarm initiation part, and the said alarm initiation part comprises: a mute ring lining 21, a mute ring 22, a reaction bird piece 23, a bird piece reset seat 24 and a reset seat spring 25; where, the said reaction bird piece 23 is a long body, the said reaction bird piece 23 comprises a mounting hole 231, a limiting hole 232, a mute ring clamping protrusion 233 and a spring catch 234; the said mounting hole 231 is a waist-type hole, the said mounting hole 231 lies in the middle of the said reaction bird piece 23; when assembled, the said mounting hole 231 sheathes the post of the fishing line reel body, spacing the said reaction bird piece 23 with a screw, the reaction bird piece 23 installed can not only rotate, but move within the waist-type hole of the mounting hole 231; the said mute ring clamping protrusion 233 and spring catch 234 are respectively located at both ends of the said reaction bird piece 23, the said mute ring clamping protrusion 233 plays the role of driving the reaction bird piece 23 to rotate after bring connected with the mute ring 22 and accepting the action of the mute ring 22; the said limiting hole 232 is a waist-type hole, lying between the said mounting hole 231 and the said spring catch 234; and the said reaction bird piece 23, mounting hole 231, limiting hole 232, mute ring clamping protrusion 233 and spring catch 234 are made into one piece by molding.

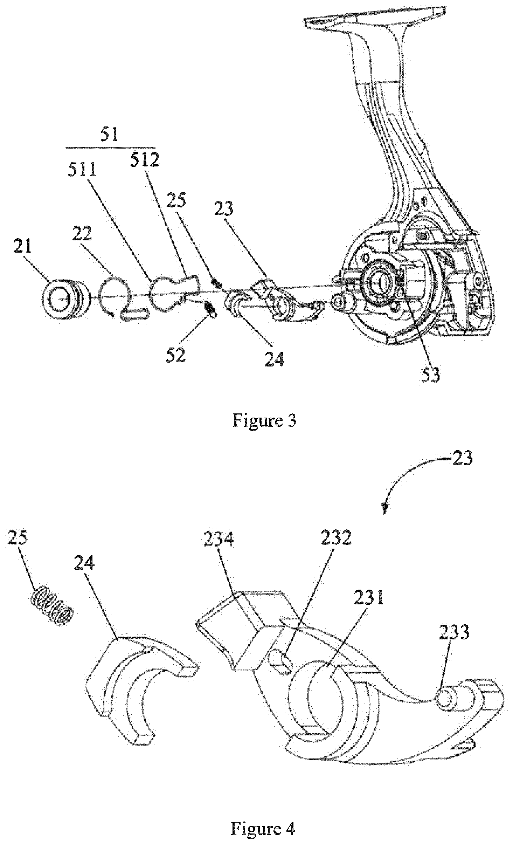

Besides, as is shown by Figure 4, one side of the said bird piece reset seat 24 is a reset seat arc-shaped groove, after being connected with the reaction bird piece 23, the reset seat arc-shaped groove embraces the arc portion of the reaction bird piece 23, surrounding around the screw; while the other side is opened with a spring emplacement hole (not shown by the figure), and the side where the bird piece reset seat 24 is connected with the said reaction bird piece 23 is arranged with a spacing clip (not shown by the figure); during the assembly, place the spacing clip into the said limiting hole 232, so as to limit the moving trail of the said bird piece reset seat 24; the said spacing clip can either be a circular cylinder, square or other shapes, so long as it can slide or move smoothly in the limiting hole 232, without deflection; the said reset seat spring 25 is a compression spring, one end of which is inserted in the said spring emplacement hole, while the other end protruding from the said spring emplacement hole is connected with the said spring catch 234. The said spring catch 234 has two functions, one is serving as the force applying plane of the reset seat spring 25, which cooperates with the bird piece reset seat 24 to compress the reset seat spring 25; the other function is clamping with and driven by the ratchet gear of the fishing line seat, so as to enable the reaction bird piece 23 to move; after assembly, the reset seat spring 25 is relaxed provided that there is no external force, pushing the bird piece reset seat 24 to the arc portion of the reaction bird piece 23, forming embraced shape.

Besides, please refer to Figure 3, the diagram where the alarm switch part is separated from the alarm initiation part in an explosive way; and the said alarm switch part comprises: an alarm switch dial ring 51, an alarm switch tension spring 52 and an alarm switch copper sheet part 53; where, the said alarm switch dial ring 51 comprises a ring holding part 511 and a ring dialing part 512; the said ring holding part 511 is connected with the said mute ring lining 21, the said ring dialing part 512 is connected with the said alarm switch copper sheet part 53 flexibly; the said alarm switch tension spring 52 is a tension spring, one end of the said alarm switch tension spring 52 is connected with the said ring dialing part 512, while the other end of the said alarm switch tension spring 52 is connected with the said fishing line reel body, function of the alarm switch tension spring 52 is to reset the alarm switch dial ring 51 to the position where there is no stress; the said alarm switch copper sheet part 53 is the combination of two copper sheets, the said alarm switch copper sheet part 53 is assembled on the said fishing line reel body, the two copper sheets will not contact without external force, one end of one copper sheet of the said alarm switch copper sheet part 53 is connected with the ring dialing part 512 of the said alarm switch dial ring 51 flexibly, accepting the thrust force of the ring dialing part 512 and approaches to the other copper sheet, and the other end of the two copper sheets of said alarm switch copper sheet part 53 are respectively connected with the said electric control part. When the ring dialing part 512 of the alarm switch dial ring 51 pushes one copper sheet of the alarm switch copper sheet part 53 to approach to the other copper sheet, and makes the two copper sheets to rely on in together, the alarm switch will trigger.

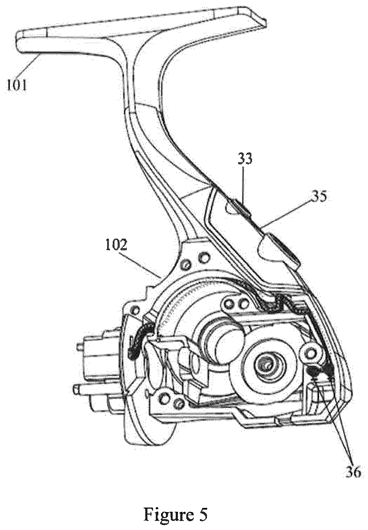

Besides, please refer to Figure 2, the diagram where the fishing line reel body is separated from the fishing signal device in an explosive way, the said electric control part comprises a power supply part and a control part, the said control part is connected with the said frame part 102, and the said control part comprises a waterproof ring 31, a circuit board combination 32, a button 33, a buzzer 34 and an end cover 35. The shape where the appearance of the waterproof ring 31 cooperates with the assembly position of the frame part 102 prevents water from entering the circuit board combination 32; the circuit board combination 32 is installed with a button 33 and a buzzer 34, then covered with an end cover 35, locked to the frame part 102 with a screw; please refer to Figure 5 at the same time, the said control part further comprises two power supply connecting parts 36, which are connected with the said circuit board combination 32 via electric wire, and assembled at the said frame part 102, one end of the said two power supply connecting parts 36 face the said cover body part 103; the power supply connecting part 36 is an elastic body, which can either be spring, shrapnel or other elastic bodies, so long as it can sink in proper time when pressed and contact with the pressure applying body; in this embodiment, the power supply connecting part 36 is a compression spring; however, it can't be used for restricting this application.

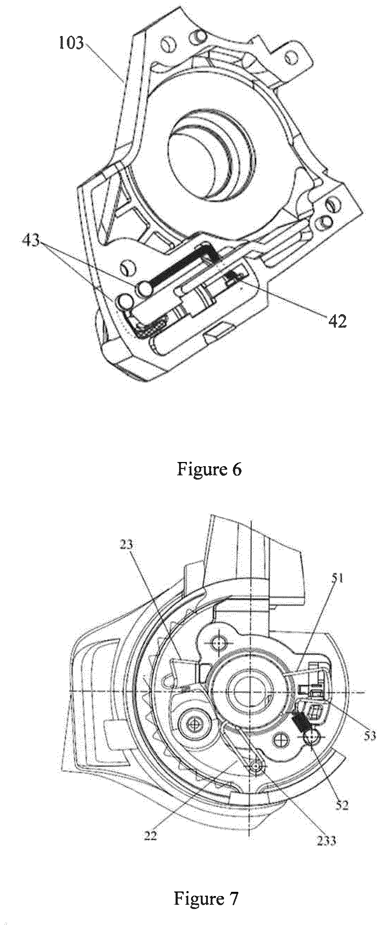

Besides, please refer to Figure 2 and Figure 6 in the meantime; the said power supply part is connected with the said cover body part 103, the said power supply part comprises at least one battery 41, two battery springs 42 and two power contacts 43, the said two battery springs 42 are respectively assembled at both ends of the battery accommodating space of the said cover body part 103, and the battery accommodating space is covered shall be covered with a battery cover, so as to prevent water immersion and protect power source; middle of the said two battery springs 42 are connected with at least one of the said battery 41; in this application, there are three batteries 41; however, they can't be used to restrict the application; the said two power contacts 43 are assembled at the said cover body part 103, corresponding to the positions of the said two power supply connecting parts 36, and the said two power contacts 43 are connected with the said two battery springs 42 one to one; after the cover body part 103 is assembled to the frame part 102, the two power contacts 43 will be connected with the two power supply connecting parts 36 accordingly, and power is switched on.

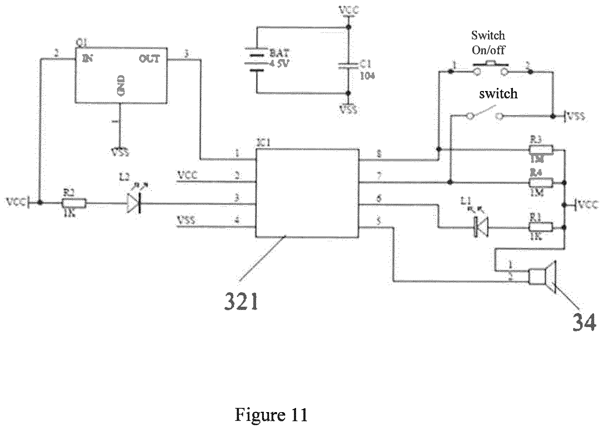

In respect of control, please refer to Figure 11, circuit diagram of the application; as is shown in the figure, the said circuit board combination 32 comprises a microcontroller 321, for controlling the electric quantity of the buzzer 34 and detecting the electric quantity of the battery 41; another major task is to give alarm and flash in good time according to the contents set, reminding anglers whether to wind up the fishing line.

Next, operating principle of the application will be described, please refer to Figure 7, the position diagram of the reaction bird piece when the fishing line reel of the application conducts clockwise rotation; namely, after throwing, maintain the fishing line guide arm at the state of setting out the fishing line till the hook component reaches the fishing place in the water, and enable the handle to reverse towards the fishing line winding direction in such state, and the rotor will rotate towards the fishing line winding direction. When the rotor rotates towards the fishing line winding direction, the fishing line guide arm will be reset by the guide arm flipping structure to the fishing line winding state. Continue to rotate the handle towards the fishing line winding direction, as is shown by the figure, and position of the reaction bird piece 23 will be close to the side which is near the center.

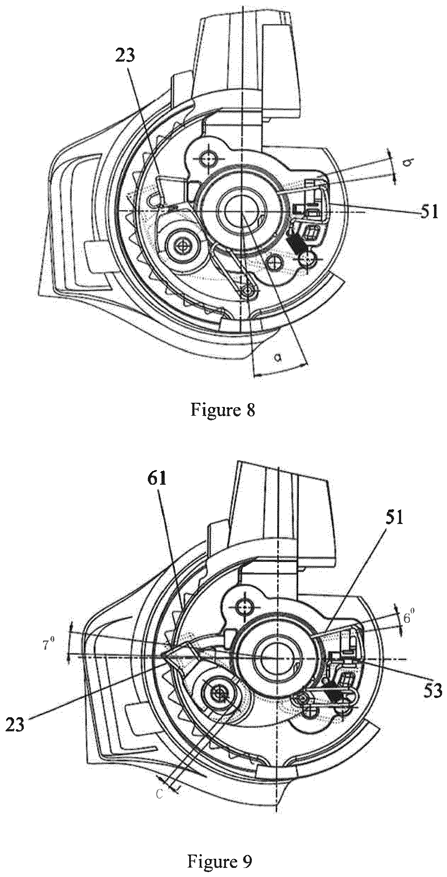

Next, please refer to Figure 8, the mobile location angle diagram of the reaction bird piece of the application; after the handle conducts rotation towards the fishing line winding direction, is in place, waits for the fish to eat the bait, and all is ready, the fishermen shall press the button 33 of the control part and start the fishing signal device; then, the buzzer 34 will send out a sound, and the LED on the circuit board combination 32 will send a flash. As is shown by the figure, angle a represents the angle rotated by the fishing line seat, when the reaction bird piece 23 moves from the solid line position (initial position) to the dotted line position (clip into the ratchet gear of the fishing line seat); angle b represents the angle when the alarm switch dial ring 51 triggers the alarm switch copper sheet part, angle a is greater than angle b; what shall be noted is that, when all is ready, reaction bird piece 23 may either be in the position of the solid line, or be in the position of the dotted line, or between the two; however, fishing line seat deflection of such degree will no cause alarm.

However, when fish starts to eat the bait, pulling the fishing line, giving rise to rotary movement of the fishing line seat, first of all, as is shown by Figure 8, angle 8 forms; if the fish continues to pull the fishing line, enabling the fishing line seat to continue to rotate, please refer to Figure 9, the diagram where the reaction bird piece of the application is pushed by the ratchet gear of the fishing line seat, the ratchet gear 61 of the fishing line seat will push the reaction bird piece 23 to deflect for 7° maximally (namely from the position of the dotted line to the position of the solid line), namely, from one end of the waist-type hole to the other end of the waist-type hole, the distance C as is shown by the figure; while the alarm switch dial ring 51 can push the alarm switch copper sheet part 53 to deflect for 6° maximally, and during the deflection for 6°, the two copper sheets of the alarm switch copper sheet part 53 contact and switch on; when the two copper sheets contact and switch on for 0.1s, the buzzer 34 sends out sound continuously, the LED on the circuit board combination 32 flashes continuously, notifying the fisherman that a big fish is hooked, and the fishing line can be taken up; otherwise, if the two copper sheets contact and switch on for less than 0.1s, the buzzer 34 will send out sound for four times, and the LED on the circuit board combination 32 will flash. What shall be noted is that, generally, ratchet gear 61 of the fishing line seat has 36 teeth; therefore, for every 10 degrees, it will jump to the next tooth; in this application, the reaction bird piece 23 can deflect for 7° maximally; thus, it will not jump to the next tooth. When the fisherman starts to rotate the fishing line reel and wind up the fishing line, the ratchet gear 61 of the fishing line seat will conduct clockwise rotation, the strength imposed by the ratchet gear 61 of the fishing line seat on the reaction bird piece 23 is eliminated, the reset seat spring 25 relaxes; when applying force on the spring catch 234 and bird piece reset seat 24, the bird piece reset seat 24 resists against the threaded rod and can't move, and the relaxation force of the reset seat spring 25 drives the reaction bird piece 23 to return to the position before being pushed.

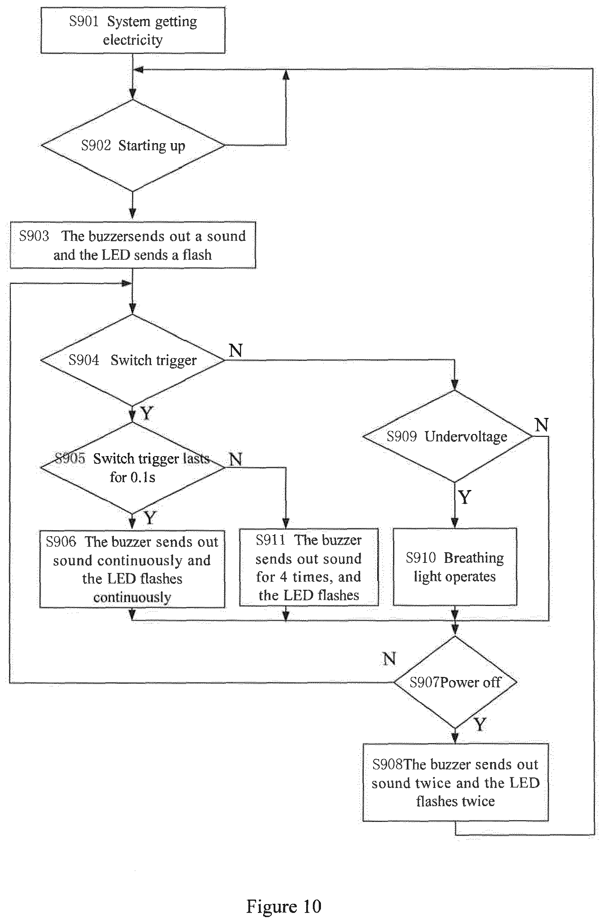

Please refer to Figure 10, the work flow diagram of the application comprises Step S901 System getting electricity, namely, batteries 41 are loaded to the battery accommodating space of the cover body part 103; Step S902 Starting up, press the button 33, switch on the power and start up the fishing signal device; Step S903 The buzzersends out a sound and the LED sends a flash, waiting for fish to eat the bait; Step S904 Switch trigger, namely, the two copper sheets of the alarm switch copper sheet part 53 contact and switch on; Step S905 Switch trigger lasts for 0.1s, namely, the two copper sheets of the alarm switch copper sheet part 53 contact and switch on for 0.1s; Step S906 The buzzer sends out sound continuously and the LED flashes continuously, fish is hooked and the fishing line can be wound up; besides, the fisherman does not want to fish and wants to go home; Step S907 Power off, press the button 33; Step S908 The buzzer sends out sound twice and the LED flashes twice, and power is cut off. Besides, between the Step S903 and Step S904, there is also Step S909 Undervoltage, namely, electric quantity of batteries 41 is insufficient, Step S910 Breathing light operates, the LED changes gradually from bright to dim, notifying the fisherman to change batteries 41. Besides, between the Step S904 and Step S905, there is also Step S911 The buzzer sends out sound for 4 times, and the LED flashes, indicating that the fish is eating the bait; however, the bait is pulled for less than 0.1s; if such action is repeated for several times, maybe the bait is eaten up by the fish.

In conclusion, since the above technical features are adopted, compared with the existing technology, the invention has the following superiorities and positive effects:
Firstly, the invention can effectively remind that a fish is hooked, the fisherman can wind up the line at the most appropriate time, catch big fish, and raise the fun of fishing;
Secondly, the invention uses the existing components flexibly, technology is promoted, with low cost;
Thirdly, since the electric control part of the invention is separately placed, shape of the fishing line reel is more flexible, with more aesthetic appearance.

The preferred embodiments of the invention are only used for facilitating the elaboration. The preferred embodiments have neither narrated all the details, nor restricted the invention to only the specific embodiments mentioned. Evidently, the embodiments can be modified and changed within the scope of the claims. The specification has selected and given specific description to these embodiments, so as to interpret the principle and practical application of the invention in a better way, thus enabling technicians of the technical field to utilize the invention in a better way. The invention is only restricted by the scope of the claims. Disclosed above are only the preferred embodiments of the invention.

## Claims

1. A fishing line reel provided with a fishing signal device, comprising a fishing line reel body, a winding reel, a transmission gear and a rotor; wherein said fishing line reel body comprises a fishing rod mounting base part (101), a frame part (102) and a cover body part (103); wherein said fishing signal device comprises: an electric control part, an alarm switch part and an alarm initiation part, and said alarm initiation part comprises: a mute ring lining (21) and a mute ring (22), featuring that, the said alarm initiation part further comprises: a reaction bird piece (23), a bird piece reset seat (24) and a reset seat spring (25), wherein
said reaction bird piece (23) is a long body, comprising a mounting hole (231), a limiting hole (232), a mute ring clamping protrusion (233) and a spring catch (234),
said mounting hole (231) is a waist-type hole, located in the middle of said reaction bird piece (23);
said mute ring clamping protrusion (233) and spring catch (234) are respectively located at both ends of the reaction bird piece (23);
said limiting hole (232) is a waist-type hole, located between said mounting hole (231) and the said spring catch (234),
said reaction bird piece (23), mounting hole (231), limiting hole (232), mute ring clamping protrusion (233) and spring catch (234) are made into one piece by molding;
wherein one side of said bird piece reset seat (24) is a reset seat arc-shaped groove, while the other side is opened with a spring emplacement hole, and the side where the said bird piece reset seat (24) is connected with said reaction bird piece (23) is arranged with a spacing clip;
said reset seat spring (25) is a compression spring, one end of said reset seat spring (25) is inserted in said spring emplacement hole, while the other end of said reset seat spring (25) protruding from said spring emplacement hole is connected with said spring catch (234),
said alarm switch part comprises: an alarm switch dial ring (51), an alarm switch tension spring (52) and an alarm switch copper sheet part (53),
wherein said alarm switch dial ring (51) comprises a ring holding part (511) and a ring dialing part (512), said ring holding part (511) is connected with said mute ring lining (21), and said ring dialing part (512) is connected with said alarm switch copper sheet part (53) flexibly;
said alarm switch tension spring (52) is an extension spring, one end of said alarm switch tension spring (52) is connected with said ring dialing part (512), while the other end is connected with the said fishing line reel body; and
said alarm switch copper sheet part (53) is a combination of two copper sheets, assembled to said fishing line reel body, one end of the said alarm switch copper sheet part (53) is connected with the ring dialing part (512) of said alarm switch dial ring (51) flexibly, and the other end is connected with the said electric control part.

2. A fishing line reel as stated in claim 1, wherein said electric control part comprises a power supply part and a control part, said control part is connected with said frame part (102), and said control part comprises a waterproof ring (31), a circuit board combination (32), a button (33), a buzzer (34) and an end cover (35).

3. A fishing line reel as stated in claim 2, wherein said control part further comprises two power supply connecting parts (36), said two power supply connecting parts (36) are connected with said circuit board combination (32) via electric wire, said two power supply connecting parts (36) are assembled at said frame part (102), and one end of said two power supply connecting parts (36) faces the said cover body part;
besides, said power supply part is connected with said cover body part (103), and the said power supply part comprises at least one battery (41), two battery springs (42) and two power contacts (43),
said two battery springs (42) are respectively assembled at both ends of the battery accommodating space of said cover body part (103), and middle of the said two battery springs (42) is connected with at least one of the said battery (41);
said two power contacts (43) are assembled at the said cover body part (103), corresponding to the positions of said two power supply connecting parts (36), and said two power contacts (43) are connected with two of said battery springs (42).

4. A fishing line reel as stated in claim 2, wherein said circuit board combination (32) comprises a microcontroller (321), for controlling the buzzer (34).

## Patentansprüche

1. Angelschnurrolle, die mit einer Angelsignalvorrichtung versehen ist, mit
einem Angelschnurrollenkörper, einer Wickelrolle, einem Getriebe und einem Rotor; wobei der Angelschnurrollenkörper ein Angelrutenbefestigungsbasisteil (101), ein Rahmenteil (102) und ein Abdeckkörperteil (103) umfasst;
wobei die Angelsignalvorrichtung umfasst: ein elektrisches Steuerteil, ein Alarmschalterteil und ein Alarmauslöseteil, wobei das Alarmauslöseteil umfasst: eine Mute-Ringbuchse (21) und einen Mute-Ring bzw. Stummschaltring (22),
wobei das Alarmauslöseteil umfasst: ein Reaktionsvogelteil (reaction bird part) (23), einen Vogelteilrückstellsitz (24) und eine Rückstellsitzfeder (25),
das Reaktionsvogelteil (23) ein langgestreckter Körper ist, der ein Montageloch (231), ein Begrenzungsloch (232), einen Mute-Ring-Klemmvorsprung (233) und eine Federaufnahme (234) umfasst,
das Montageloch (231) ein Mittelteil-Loch ist, das sich in der Mitte des Reaktionsvogelstücks (23) befindet;
der Mute-Ring-Klemmvorsprung (233) und die Federaufnahme (234) sich jeweils an beiden Enden des Reaktionsvogelstücks (23) befinden;
das Begrenzungsloch (232) ein gelängtes Loch ist, das sich zwischen dem Montageloch (231) und der Federaufnahme (234) befindet,
das Reaktionsvogelstück (23), das Montageloch (231), das Begrenzungsloch (232), der Mute-Ring-Klemmvorsprung (233) und die Federaufnahme (234) durch Gießen in einem Stück hergestellt sind;
wobei eine Seite des Vogelteilrückstellsitzes (24) eine bogenförmige Rückstellsitznut aufweist, während die andere Seite mit einem Federaufnahmeloch geöffnet ist, und die Seite, an der der Vogelteilrückstellsitz (24) mit dem Reaktionsvogelteil (23) verbunden ist, mit einer Abstandsschelle versehen ist;
die Rückstellsitzfeder (25) eine Druckfeder ist, wobei ein Ende der Rückstellsitzfeder (25) in das Federaufnahmeloch eingesetzt ist, während das andere Ende der Rückstellsitzfeder (25), das aus dem Federaufnahmeloch herausragt, mit der Federaufnahme (234) verbunden ist,
das Alarmschalterteil umfasst: einen Alarmschalter-Wählerring (51), eine Alarmschalter-Zugfeder (52) und ein Alarmschalter-Kupferblechteil (53), wobei
der Alarmschalter-Wählerring (51) ein Ringhalteteil (511) und ein Ringwählteil (512) aufweist, wobei das Ringhalteteil (511) mit der Mute-Ringbuchse (21) verbunden ist und das Ringwählteil (512) mit dem Alarmschalter-Kupferblechteil (53) flexibel verbunden ist;
die Alarmschalter-Zugfeder (52) eine Zugfeder ist, ein Ende der Alarmschalter-Zugfeder (52) mit dem Ringwählteil (512) verbunden ist, während das andere Ende mit dem Angelschnur-Rollenkörper verbunden ist; und
das Alarmschalter-Kupferblechteil (53) eine Kombination aus zwei Kupferblechen ist, die mit dem Angelschnur-Rollenkörper zusammengebaut ist, wobei ein Ende des Alarmschalter-Kupferblechteils (53) mit dem Ringwählteil (512) des Alarmschalter-Wählerrings (51) flexibel verbunden ist, und das andere Ende mit dem elektrischen Steuerteil verbunden ist.

2. Angelschnurrolle nach Anspruch 1, wobei das elektrische Steuerteil ein Stromversorgungsteil und ein Steuerteil umfasst, das Steuerteil mit dem Rahmenteil (102) verbunden ist und das Steuerteil einen wasserdichten Ring (31), eine Schaltungsplattenkombination (32), einen Knopf (33), einen Summer (34) und eine Endabdeckung (35) umfasst.

3. Angelschnurrolle nach Anspruch 2, wobei das Steuerteil weiterhin zwei Stromversorgungs-Anschlussteile (36) umfasst, wobei die beiden Stromversorgungs-Anschlussteile (36) mit der Schaltungsplattenkombination (32) über einen elektrischen Draht verbunden sind, die zwei Stromversorgungs-Anschlussteile (36) an dem Rahmenteil (102) montiert sind und ein Ende der zwei Stromversorgungs-Anschlussteile (36) dem Abdeckkörperteil zugewandt ist;
weiterhin das Stromversorgungsteil mit dem Abdeckkörperteil (103) verbunden ist und das Stromversorgungsteil mindestens eine Batterie (41), zwei Batteriefedern (42) und zwei Stromkontakte (43) aufweist,
die zwei Batteriefedern (42) jeweils an beiden Enden des Batterieaufnahmeraums des Abdeckkörperteils (103) angebracht sind und die Mitte der beiden Batteriefedern (42) mit mindestens einer der Batterien (41) verbunden ist;
die beiden Stromkontakte (43) an dem Abdeckkörperteil (103) entsprechend den Positionen der beiden Stromversorgungs-Anschlussteile (36) angebracht sind und die beiden Stromkontakte (43) mit zwei der Batteriefedern (42) verbunden sind.

4. Angelschnurrolle nach Anspruch 2, wobei die Schaltungsplattenkombination (32) einen Mikrocontroller (321) zur Steuerung des Summers (34) aufweist.

## Revendications

1. Moulinet de ligne de pêche pourvu d'un dispositif de signalisation de pêche, comprenant un corps de moulinet de ligne de pêche, une bobine d'enroulement, un engrenage de transmission et un rotor ;
dans lequel ledit corps de moulinet de ligne de pêche comprend une partie de base de montage de canne à pêche (101), une partie de cadre (102) et une partie de corps de couvercle (103) ;
dans lequel ledit dispositif de signalisation de pêche comprend une partie de commande électrique, une partie de commutateur d'alarme et une partie de déclenchement d'alarme, et ladite partie de déclenchement d'alarme comprend une garniture d'anneau de silencieux (21) et un anneau de silencieux (22), **caractérisé en ce que** ladite partie de déclenchement d'alarme comprend en outre une pièce d'oiseau de réaction (23), un siège de rétablissement de pièce d'oiseau (24) et un ressort de siège de rétablissement (25),
dans lequel :
ladite pièce d'oiseau de réaction (23) est un corps long qui comporte un trou de montage (231), un trou de limitation (232), une saillie de serrage d'anneau de silencieux (233) et un cliquet à ressort (234),
ledit trou de montage (231) est un trou allongé qui est formé au milieu de ladite pièce d'oiseau de réaction (23) ;
ladite saillie de serrage d'anneau de silencieux (233) et ledit cliquet à ressort (234) sont situés respectivement aux deux extrémités de la pièce d'oiseau de réaction (23) ;
ledit trou de limitation (232) est un trou allongé qui est formé entre ledit trou de montage (231) et ledit cliquet à ressort (234),
ladite pièce d'oiseau de réaction (23), ledit trou de montage (231), ledit trou de limitation (232), ladite saillie de serrage d'anneau de silencieux (233) et ledit cliquet à ressort (234) sont constitués d'une seule pièce par moulage ;
dans lequel un premier côté dudit siège de rétablissement de pièce d'oiseau (24) est une rainure en forme d'arc de siège de rétablissement, alors que l'autre côté est ouvert avec un trou de réception de ressort, et le côté auquel ledit siège de rétablissement de pièce d'oiseau (24) est connecté à ladite pièce d'oiseau de réaction (23) est pourvu d'une pince d'écartement ;
ledit ressort de siège de rétablissement (25) est un ressort de compression, une première extrémité dudit ressort de siège de rétablissement (25) est insérée dans ledit trou de réception de ressort, alors que l'autre extrémité dudit ressort de siège de rétablissement (25) qui fait saillie hors dudit trou de réception de ressort est connectée audit cliquet à ressort (234),
ladite partie de commutateur d'alarme comprend un anneau de sonnerie de commutateur d'alarme (51), un ressort de traction de commutateur d'alarme (52) et une partie de feuille de cuivre de commutateur d'alarme (53),
dans lequel :
ledit anneau de sonnerie de commutateur d'alarme (51) comprend une partie de support d'anneau (511) et une partie d'anneau de sonnerie (512), ladite partie de support d'anneau (511) est connectée à ladite garniture d'anneau de silencieux (21), et ladite partie d'anneau de sonnerie (512) est connectée de façon flexible à ladite partie de feuille de cuivre de commutateur d'alarme (53) ;
ledit ressort de traction de commutateur d'alarme (52) est un ressort d'extension, une première extrémité dudit ressort de traction de commutateur d'alarme (52) est connectée à ladite partie d'anneau de sonnerie (512), alors que l'autre extrémité est connectée audit corps de moulinet de ligne de pêche ; et
ladite partie de feuille de cuivre de commutateur d'alarme (53) est une combinaison de deux feuilles de cuivre, qui sont assemblées audit corps de moulinet de ligne de pêche, une première extrémité de ladite partie de feuille de cuivre de commutateur d'alarme (53) est connectée de façon flexible à la partie d'anneau de sonnerie (512) dudit anneau de sonnerie de commutateur d'alarme (51), et l'autre extrémité est connectée à ladite partie de commande électrique.

2. Moulinet de ligne de pêche selon la revendication 1, dans lequel ladite partie de commande électrique comprend une partie d'alimentation électrique et une partie de commande, ladite partie de commande est connectée à ladite partie de cadre, (102), et ladite partie de commande comprend un anneau étanche à l'eau (31), une combinaison de circuits imprimés (32), un bouton (33), un bruiteur (34) et un couvercle d'extrémité (35).

3. Moulinet de ligne de pêche selon la revendication 2, dans lequel ladite partie de commande comprend en outre deux parties de connexion d'alimentation électrique (36), lesdites deux parties de connexion d'alimentation électrique (36) sont connectées à ladite combinaison de circuits imprimés (32) par l'intermédiaire d'un fil électrique, lesdites deux parties de connexion d'alimentation électrique (36) sont assemblées à ladite partie de cadre (102), et une première extrémité desdites deux parties de connexion d'alimentation électrique (36) fait face à ladite partie de corps de couvercle ;
en outre, ladite partie d'alimentation électrique est connectée à ladite partie de corps de couvercle (103), et ladite partie d'alimentation électrique comprend au moins une batterie (41), deux ressorts de batterie (42) ainsi que deux contacts électriques (43),
lesdits deux ressorts de batterie (42) sont assemblés respectivement aux deux extrémités de l'espace de logement de batterie de ladite partie de corps de couvercle (103), et le milieu desdits deux ressorts de batterie (42) est connecté à ladite au moins une batterie (41) ;
lesdits deux contacts électriques (43) sont assemblés à ladite partie de corps de couvercle (103), de façon correspondante avec les positions desdites deux parties de connexion d'alimentation électrique (36), et lesdits deux contacts électriques (43) sont connectés à deux desdits ressorts de batterie (42).

4. Moulinet de ligne de pêche selon la revendication 2, dans lequel ladite combinaison de circuits imprimés (32) comprend un micro-dispositif de commande (321) pour commander le bruiteur (34) .
